(19) Europäisches Patentamt
European Patent Office
Office européen des brevets

(11) **EP 3 480 836 A1**

(12) **EUROPEAN PATENT APPLICATION**
published in accordance with Art. 153(4) EPC

(43) Date of publication:
08.05.2019 Bulletin 2019/19

(21) Application number: 17820290.9

(22) Date of filing: 29.06.2017

(51) Int Cl.:
*H01G 11/52* (2013.01)        *H01G 9/02* (2006.01)
*H01G 11/84* (2013.01)

(86) International application number:
PCT/JP2017/024005

(87) International publication number:
WO 2018/003936 (04.01.2018 Gazette 2018/01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 30.06.2016 JP 2016130325

(71) Applicant: Kuraray Co., Ltd.
Kurashiki-shi, Okayama 710-0801 (JP)

(72) Inventors:
• HAYAKAWA, Tomohiro
Okayama-shi
Okayama 702-8601 (JP)
• KUSUNOKI, Toshimichi
Okayama-shi
Okayama 702-8601 (JP)
• KAWAKAMI, Masami
Okayama-shi
Okayama 702-8601 (JP)

(74) Representative: Müller-Boré & Partner
Patentanwälte PartG mbB
Friedenheimer Brücke 21
80639 München (DE)

(54) **SEPARATOR FOR CAPACITOR**

(57)    An object of the present invention is to provide: a capacitor separator which not only has a high strength but also exhibits a low internal resistance when used in a capacitor; and a method of producing the same. The present invention relates to a capacitor separator comprising fibrillated fibers consisting of a polyvinyl alcohol-based resin in an amount of not less than 30% by weight based on a total weight of the separator.

Fig.1

**Description**

Technical Field

The present invention relates to a capacitor separator, and a method of producing the same.

Background Art

Electric double-layer capacitors can have an extremely high capacitance and are repeatedly usable by charging; therefore, they have been used in a variety of fields, such as memory backup power supplies of personal computers and auxiliaries of secondary batteries. Such electric double-layer capacitors are usually constituted by an anode, a cathode, an electrolyte solution, a separator, current collectors and the like, and the separator is used for isolating a cathode active substance and an anode active substance.

Capacitor separators are capable of inhibiting internal short-circuit between a cathode active substance and an anode active substance. For instance, Patent Document 1 discloses a separator using a cellulose fiber fibrillation product. Further, Patent Document 2 discloses a separator using rayon, which is a regenerated fiber.

Prior Art Document

Patent Document

[Patent Document 1] Japanese Patent No. 2938315
[Patent Document 2] Japanese Patent No. 3290734

Summary of Invention

Problems to be solved by the invention

In recent years, such capacitor separators are demanded to inhibit short-circuit and to be reduced in thickness as much as possible at the same time. A reduction in the thickness of a separator increases the risk of internal short-circuit between a cathode active substance and an anode active substance and leads to a reduction in the mechanical strength, which may cause problems in the separator production process. Accordingly, in order to improve the mechanical strength, the amount of a binder to be added is increased in some cases; however, an addition of the binder in an excessive amount is not preferred since it hinders good permeation of electrolyte ions contained in an electrolyte solution through the separator and causes an increase in the internal resistance when the separator is used in a capacitor.

The separators disclosed in Patent Documents 1 and 2 are highly useful since they are dense and can attain high liquid retainability and good electrical characteristics. However, the strength of these separators may be insufficient when they are reduced in thickness.

In view of the above, an object of the present invention is to provide: a capacitor separator which not only has a high strength but also exhibits a low internal resistance when used in a capacitor; and a method of producing the same.

Solution to Problem

In order to solve the above-described problems, the present inventor intensively studied capacitor separators and production methods thereof in detail, thereby arriving at the present invention.

That is, the present invention encompasses the following preferred modes.

[1] A capacitor separator comprising fibrillated fibers consisting of a polyvinyl alcohol-based resin in an amount of not less than 30% by weight based on a total weight of the separator.
[2] The capacitor separator according to [1], wherein the fibrillated fibers consisting of the polyvinyl alcohol-based resin are in a cotton-like form.
[3] The capacitor separator according to [1] or [2], wherein the fibrillated fibers consisting of the polyvinyl alcohol-based resin have an aspect ratio of 500 or higher.
[4] The capacitor separator according to any one of [1] to [3], comprising the polyvinyl alcohol-based resin as a binder in an amount of not greater than 15% by weight.
[5] The capacitor separator according to any one of [1] to [4], wherein the fibrillated fibers consisting of the polyvinyl alcohol-based resin have a CSF of 5 to 500 ml.

[6] The capacitor separator according to any one of [1] to [5], having a thickness of 20 to 80 $\mu$m and a specific tensile strength of not less than 30 N·m/g.

[7] A method of producing the capacitor separator according to any one of [1] to [6], the method comprising the step of fibrillating readily fibrillatable polyvinyl alcohol fibers that comprise a polyvinyl alcohol and a polyalkylene oxide.

[8] The method according to [7], wherein a weight ratio of the polyalkylene oxide in the readily fibrillatable polyvinyl alcohol fibers is 3 to 40% by weight with respect to a total amount of the polyvinyl alcohol and the polyalkylene oxide.

[9] A capacitor comprising the capacitor separator according to any one of [1] to [6].

Effects of Invention

According to the present invention, a capacitor separator which not only has a high strength but also exhibits a low internal resistance when used in a capacitor, and a method of producing the same can be provided.

Brief Description of Drawings

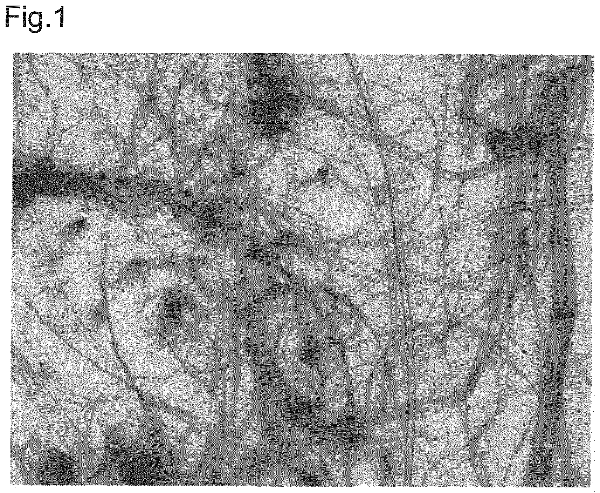

[FIG. 1] FIG. 1 shows an optical micrograph of the cotton-like fibrillated PVA fibers obtained in Production Example 1.

Description of Embodiments

A capacitor separator according to one embodiment of the present invention comprises fibrillated fibers (A) consisting of a polyvinyl alcohol (hereinafter, also referred to as "fibrillated PVA fibers (A)"), namely a separator obtained by papermaking using the fibrillated PVA fibers (A).

In the present invention, from the standpoint of attaining oriented crystallization, the polyvinyl alcohol contained in the fibrillated PVA fibers (A) has a vinyl alcohol structural unit at a ratio of usually not less than 70% by mole, preferably not less than 90% by mole, more preferably not less than 95% by mole, still more preferably not less than 98% by mole, particularly preferably not less than 99% by mole, extremely preferably not less than 99.8% by mole. The polyvinyl alcohol may be a copolymer which contains, in addition to the vinyl alcohol structural unit, a structural unit derived from other monomer, such as ethylene, itaconic acid, vinylamine, acrylamide, vinyl pivalate, maleic anhydride or a sulfonate-containing vinyl compound, at a ratio of 30% by mole or less with respect to the polyvinyl alcohol. The saponification degree is preferably 80% by mole or higher, but usually 100% by mole or lower. The viscosity-average polymerization degree of the polyvinyl alcohol is not particularly restricted; however, from the standpoint of obtaining high-strength fibrils, it is preferably 500 or higher, more preferably 1,500 or higher. The upper limit value of the viscosity-average polymerization degree of the polyvinyl alcohol is not particularly restricted; however, it is, for example, 4,000 or lower. Further, in order to improve the hot water resistance, the polyvinyl alcohol may be acetalized by a post-reaction after being fibrillated. The viscosity-average polymerization degree of the polyvinyl alcohol can be measured in accordance with JIS K6726.

In the present invention, the acetalization degree of the polyvinyl alcohol is preferably 3% by mole or higher, more preferably 6% by mole or higher, still more preferably 10% by mole or higher, but preferably 40% by mole or lower, more preferably 35% by mole or lower, still more preferably 30% by mole or lower, particularly preferably 25% by mole or lower, especially preferably 20% by mole or lower and, for example, 15% by mole or lower. When the acetalization degree of the polyvinyl alcohol is equal to or higher than the above-described lower limit value, fibrillated PVA fibers (A) having excellent water resistance can be obtained. Meanwhile, when the acetalization degree of the polyvinyl alcohol is equal to or lower than the above-described upper limit value, the fibrillated PVA fibers (A) are likely to have a fine structure, and the fibers can be easily refined by a mechanical treatment. The term "acetalization degree" used herein refers to a ratio of acetal bonds, which are generated by reaction between an acetal compound and hydroxyl groups of the polyvinyl alcohol, with respect to the vinyl alcohol structural unit, and represents a ratio of the acetal bonds existing in the polyvinyl alcohol fibers. The acetalization degree of the polyvinyl alcohol can be determined using $^1$H-NMR or $^{13}$C-NMR.

In the present invention, the aspect ratio of the fibrillated PVA fibers (A) is preferably 500 or higher, more preferably 600 or higher, still more preferably 700 or higher, particularly preferably 800 or higher, especially preferably 900 or higher, extremely preferably 1,000 or higher, but preferably 6,000 or lower, more preferably 5,000 or lower, still more preferably 4,000 or lower, particularly preferably 3,000 or lower, especially preferably 2,500 or lower. When the aspect ratio of the fibrillated PVA fibers (A) is equal to or higher than the above-described lower limit value, not only the fibrillated PVA fibers (A) are less likely to be dislodged during the papermaking of the separator and the mechanical strength of the separator can thus be further improved, but also this enables to reduce the binder content; therefore, the internal resistance of a capacitor can be reduced. Meanwhile, when the aspect ratio of the fibrillated PVA fibers (A) is equal to or lower than the above-described upper limit value, excessive entanglement of the fibers can be suppressed, so that the texture of the separator is improved. In the present invention, for example, when fibers other than the PVA fibers are incorporated, the aspect ratio of the fibrillated PVA fibers (A) can be determined by first removing the fibers other than the PVA fibers by a dissolution method conforming to a fiber identification method, and then arbitrarily collecting 20 PVA fibers in a fibrillated state, measuring the width and the length of each of the thus collected fibers under a light microscope, calculating the aspect ratio based on the thus measured values, and taking the average of the 20 fibers.

In the present invention, the CSF (Canadian Standard Freeness) of the fibrillated PVA fibers (A) is preferably 5 to 500 ml, more preferably 10 to 400 ml, still more preferably 50 to 350 ml. The CSF represents the beating degree of the fibers. When the CSF of the fibrillated PVA fibers (A) is equal to or higher than above-described lower limit value, the texture of the separator itself is good, so that a dense and uniform separator can be obtained. Meanwhile, when the CSF of the fibrillated PVA fibers (A) is equal to or lower than the upper limit value, a separator having a higher mechanical strength can be obtained. In the present invention, the CSF can be measured in accordance with JIS P8121 "Pulps - Determination of Drainability".

In the present invention, the form of the fibrillated PVA fibers (A) is not particularly restricted, and examples thereof include a fibrous form (particularly a cotton-like form) and a powder form. From the standpoint of obtaining a capacitor separator having a higher mechanical strength and a lower internal resistance at the same time, the fibrillated PVA fibers (A) are preferably in a fibrous form, more preferably in a cotton-like form.

In the present invention, although the fibrillated PVA fibers (A) do not contain any resin other than PVA, the fibrillated PVA fibers (A) may contain an additive(s), such as an inorganic pigment, an organic pigment, a thermal degradation inhibitor, a pH modifier, a cross-linking agent and an oil agent, within a range that does not impair the effects of the present invention. Further, the fibrillated PVA fibers (A) comprise only a polyvinyl alcohol as a resin; however, when polyvinyl alcohol fibers are fibrillated, for example, a cellulose-based fibrillation aid or an acrylonitrile-based fibrillation aid is usually incorporated. The presence of the cellulose-based fibrillation aid or the acrylonitrile-based fibrillation aid largely deteriorate the fibrillatability. In addition, as a binder, a PVA-based binder is suitable for improving the mechanical strength; however, the use of such a polymer other than PVA may reduce the mechanical strength of the separator. On the other hand, according to the present invention, because of the use of fibrillated fibers comprise only a polyvinyl alcohol, the water retention rate can be reduced, and a capacitor separator having a high mechanical strength and a low internal resistance can be obtained. In cases where an organic electrolyte solution is used as an electrolyte solution in a capacitor, water acts as an impurity and deteriorates the performance of the capacitor. The lower the water retention rate, the less energy required for drying. Since the capacitor separator according to one embodiment of the present invention comprises only a polyvinyl alcohol and thus not only has a low water retention rate but also has a high heat resistance to be capable of sufficiently withstanding drying, the capacitor separator can be dried with a small amount of energy. Therefore, the separator according to one embodiment of the present invention is suitable as a separator for a capacitor in which an organic electrolyte solution is used.

The above-described capacitor separator contains the fibrillated PVA fibers (A) in an amount of not less than 30% by weight, preferably not less than 35% by weight, more preferably not less than 40% by weight, still more preferably not less than 50% by weight, but preferably 90% by weight or less, more preferably 80% by weight or less, still more preferably 70% by weight or less, based on the total weight of the separator. When the content of the fibrillated PVA fibers (A) in the capacitor separator is equal to or higher than the above-described lower limit value, the mechanical strength of the separator can be improved, and defects in the production can be suppressed. Meanwhile, when the content of the fibrillated PVA fibers (A) in the capacitor separator is equal to or less than the above-described upper limit value, variation in strength within the separator can be suppressed since the components in the separator have good uniformity.

A method of producing the fibrillated PVA fibers (A) is not particularly restricted. For example, the fibrillated PVA fibers may be produced by fibrillation through high-pressure spraying of a slurry in which polyvinyl alcohol fibers are dispersed, or the fibrillated PVA fibers may be produced by adding an appropriate fibrillation aid to a polyvinyl alcohol, spinning the resultant, subsequently dispersing the resulting spun fibers in water, and then beating the fibers to a prescribed freeness using a beating machine for papermaking, such as a beater, a disc refiner or a high-speed beating machine. In one embodiment of the present invention, as described below, it is preferred to produce the fibrillated PVA fibers (A) by beating readily fibrillatable polyvinyl alcohol fibers containing a polyvinyl alcohol and a polyalkylene oxide using a beating machine for papermaking, such as a beater, a disc refiner or a high-speed beating machine. In this case, the fibrillated PVA fibers (A) that are relatively long and, particularly, in a cotton-like form can be produced; therefore, the mechanical strength of the separator can be further improved.

The capacitor separator according to one embodiment of the present invention may also contain a binder (B) in addition to the fibrillated PVA fibers (A). In the present invention, the binder (B) is preferably a polyvinyl alcohol-based binder and, in this case, since the types of the resins constituting the binder (B) and the fibrillated PVA fibers (A) are in common, the binder (B) exhibits excellent adhesion with the fibrillated PVA fibers (A), so that a separator having superior mechanical strength can be obtained. Moreover, when the binder (B) is a polyvinyl alcohol-based binder, excellent electrolyte solution resistance and liquid absorption are attained. It is noted here that the term "polyvinyl alcohol-based binder" used herein refers to a binder composed of the above-described polyvinyl alcohol.

Generally, in the case of a capacitor separator containing a binder, a higher binder content is more advantageous from the standpoint of improving the strength of the separator. However, when the binder content is excessively high, since the shielding property of the separator is not appropriately maintained, problems such as an increase in the capacitor internal resistance may occur. From the standpoint of the adhesive strength between the main fibers and the binder that constitute the separator, it is believed that the closer the SP value of the resin constituting the main fibers and that of the binder resin, the higher is the adhesive strength. When a PVA is used as the binder in the present invention, since this allows the binder resin and the resin constituting the fibrillated PVA fibers to have the same SP value, the adhesive strength between these resins is improved, as a result of which a desired strength can be imparted to the separator even at a low binder content. Accordingly, in the present invention, a constitution having a low binder content can be adopted and it is easy to secure a certain level of shielding property even when the separator is reduced in thickness, so that the freedom of design can be improved.

Examples of the form of the binder (B) include a fiber form, a powder form and a solution form, among which a fiber form is preferred. When the separator is produced by wet papermaking, a powder-form or solution-form binder is required to be dissolved in order to allow the separator to express a mechanical strength. In this case, the resin (e.g., a polyvinyl alcohol) constituting the binder (B) forms a coating film and clogs voids between the fibers of the separator, and this may cause deterioration of the electrolyte solution-absorbing property and/or an increase in the capacitor internal resistance. In contrast, when the binder (B) is in a fiber form, by using a means for, for example, reducing the brought-in water content prior to drying, the binder fibers and the main fibers can be spot-adhered only at their intersections while allowing the fibrous form to be maintained without completely dissolving the binder (B), and the mechanical strength of the separator can be improved without causing deterioration of the electrolyte solution-absorbing property and an increase in the internal resistance; therefore, the binder (B) is particularly preferably in a fiber form. When the binder (B) is in the form of fibers, from the standpoints of improving the mechanical strength of the separator, inhibiting deterioration of the electrolyte solution-absorbing property and reducing the internal resistance, the fineness of the fibers is preferably 0.4 to 3 dtex, more preferably 0.7 to 2 dtex, still more preferably 0.8 to 1.5 dtex, and the length of the fibers is preferably 0.5 to 7 mm, more preferably 1 to 5 mm, still more preferably 2 to 4 mm.

In the present invention, the water dissolution temperature of the polyvinyl alcohol-based binder is preferably 60 to 90°C, more preferably 70 to 90°C. Further, the polyvinyl alcohol-based binder is preferably fibers constituted by a polyvinyl alcohol having an average polymerization degree of about 500 to 3,000 and a saponification degree of 97 to 99% by mole. The polyvinyl alcohol-based binder may also be composite spun fibers or mixed spun fibers (sea-island fibers) with other polymer(s). The polyvinyl alcohol constituting the polyvinyl alcohol-based binder may be a copolymer containing a structural unit derived from any of the above-described other monomers. From the standpoints of electrolyte solution-absorbing property, mechanical performance and the like, the polyvinyl alcohol-based binder contains a vinyl alcohol structural unit in an amount of preferably not less than 30% by weight, more preferably not less than 50% by weight, still more preferably not less than 80% by weight, but usually 100% by weight or less.

The capacitor separator contains the binder (B) in an amount of preferably not less than 1% by weight, more preferably not less than 3% by weight, still more preferably not less than 4% by weight, particularly preferably not less than 5% by weight, but preferably 15% by weight or less, more preferably 13% by weight or less, still more preferably 10% by weight or less, based on the total weight of the separator. When the content of the binder (B) in the capacitor separator is equal to or higher than the above-described lower limit value, the mechanical strength of the separator can be improved, and defects in the production can be suppressed. Meanwhile, when the content of the binder (B) in the capacitor separator is equal to or less than the above-described upper limit value, since excellent liquid absorption is attained and the formation of a coating film by the binder can be suppressed, the internal resistance of the capacitor separator can be reduced and deterioration of the electrolyte solution-absorbing property can be suppressed.

The capacitor separator according to one embodiment of the present invention may also contain fibrillated fibers (C) other than the fibrillated PVA fibers (A). Examples of the other fibrillated fibers include fibrillated cellulose fibers, fibrillated polyolefin fibers (e.g., polypropylene fibers, polyethylene fibers, and polypropylene-polyethylene composite fibers), fibrillated polyamide fibers, and fibrillated polyester fibers. Thereamong, the capacitor separator preferably contains fibrillated cellulose fibers from the standpoint of attaining good dispersion of the fibrillated PVA fibers (A) constituting the capacitor separator and consequently obtaining a dense and uniform separator having a good texture.

The fibrillated cellulose fibers can be obtained by subjecting cellulose fibers to a fibrillation treatment. Examples of the cellulose fibers include rayon fibers (including polynosic rayon fibers and organic solvent-based cellulose fibers), acetate-based fibers, and natural cellulose-based fibers such as natural pulp (e.g., wood pulp, cotton linter pulp, and hemp pulp). These cellulose fibers may be mercerized as well. The fibrillated cellulose fibers can be obtained by dispersing one or more kinds of these cellulose fibers in water and subsequently beating the fibers to a prescribed freeness using a beating machine for papermaking, such as a beater, a disc refiner or a high-speed beating machine.

With regard to the beating degree of the other fibrillated fibers (C), although the CSF of the other fibrillated fibers (C) varies depending on the type of the fibrillated fibers (C), it is, for example, 0 to 700 ml, preferably 0 to 600 ml, more preferably 5 to 500 ml, still more preferably 10 to 400 ml. Particularly, when the other fibrillated fibers (C) are fibrillated cellulose fibers, the CSF of the fibrillated cellulose fibers is preferably 0 to 700 ml, more preferably 0 to 550 ml. When the CSF of the fibrillated fibers (C) is in the above-described range, a dense and uniform separator having a good texture can be obtained.

The capacitor separator contains the fibrillated cellulose fibers in an amount of preferably not less than 10% by weight, more preferably not less than 20% by weight, still more preferably not less than 30% by weight, but preferably 70% by weight or less, more preferably 65% by weight or less, still more preferably 60% by weight or less, based on the total weight of the separator. When the content of the fibrillated cellulose fibers in the capacitor separator is equal to or higher than the above-described lower limit value, since not only the fibrillated cellulose fibers but also the fibrillated PVA fibers (A) are favorably dispersed, a uniform and dense separator can be obtained. Meanwhile, when the content of the fibrillated cellulose fibers in the capacitor separator is equal to or less than the above-described upper limit value, the separator has superior mechanical strength and can reduce the internal resistance of a capacitor.

The capacitor separator according to one embodiment of the present invention may also contain cellulose fibers (D) in addition to the fibrillated PVA fibers (A). When the capacitor separator contains the cellulose fibers (D), the cellulose fibers function as a skeleton in the separator and thereby allow the separator to maintain its mechanical strength. The cellulose fibers may be mercerized as well. Example of a pulp used for a mercerized pulp include hardwood pulp, softwood pulp, Eucalyptus pulp, esparto pulp, cotton linter pulp, pineapple pulp, Manila hemp pulp, and sisal hemp pulp. One or more selected from these pulps can be used, and these pulps may be mercerized as well.

The capacitor separator contains the cellulose fibers (D) in an amount of preferably not less than 3% by weight, more preferably not less than 5% by weight, still more preferably not less than 10% by weight, but preferably 70% by weight or less, more preferably 60% by weight or less, still more preferably 50% by weight or less, particularly preferably 40% by weight or less, especially preferably 30% by weight or less, extremely preferably 20% by weight or less, based on the total weight of the separator. When the content of the cellulose fibers (D) in the capacitor separator is equal to or higher than the above-described lower limit value, voids can be maintained appropriately, so that the separator can maintain a certain thickness or greater. Meanwhile, when the content of the cellulose fibers (D) in the capacitor separator is equal to or less than the above-described upper limit value, the shrinkage ratio and the swelling degree in an electrolyte solution can be reduced.

The CSF of the cellulose fibers (D) is usually not less than 450 ml, preferably not less than 500 ml, more preferably not less than 600 ml. When the CSF of the cellulose fibers (D) is equal to or higher than the above-described lower limit value, the shielding property of the separator can be maintained at a certain level or higher, and the separator can maintain a prescribed thickness. The CSF of the cellulose fibers (D) is usually 800 ml or less.

The air permeability representing the denseness is determined based on the beating degree and the blending ratio of the constituents of the separator, and the air permeability of the separator is preferably 0.1 to 10 cc/cm$^2$/s, more preferably 0.15 to 5 cc/cm$^2$/s, still more preferably 0.2 to 5 cc/cm$^2$/s. When the air permeability is equal to or higher than the above-described lower limit value, the internal resistance of a capacitor can be further reduced. Meanwhile, when the air permeability is equal to or less than the above-described upper limit value, the occurrence of internal short-circuit can be suppressed.

In the production of a separator, generally, a separator wound in a roll form is used by unwinding. When the tensile strength of the separator is less than a certain level, there may arise a problem such as breakage of the separator in the unwinding process. Meanwhile, from the performance standpoint, the separator is designed to maintain a certain amount of voids (or a certain density); however, when the thickness of the separator is to be reduced, the basis weight (g/m$^2$) thereof also poses a limitation on the design. Therefore, in the case of reducing the thickness of the separator, for example, the separator is required to have a tensile strength necessary for the unwinding process under the limitation of the basis weight design; however, it was difficult to satisfy both of these properties in a conventional separator. In the separator of the present invention, by adopting a constitution containing not less than 30% by weight of fibrillated PVA fibers, a reduction in thickness can be achieved while maintaining a tensile strength necessary for the separator production process.

The thickness of the capacitor separator is preferably 20 to 80 μm, more preferably 24 to 70 μm, still more preferably 28 to 60 μm. When the thickness of the capacitor separator is equal to or greater than the above-described lower limit value, the mechanical strength of the separator can be further increased. Meanwhile, when the thickness of the capacitor separator is equal to or less than the above-described upper limit value, since the passage between electrodes can be shortened, the capacitor internal resistance can be reduced.

The basis weight of the capacitor separator is preferably 12 to 30 g/m$^2$, more preferably 14 to 26 g/m$^2$, still more preferably 16 to 24 g/m$^2$. When the basis weight of the capacitor separator is equal to or greater than the above-described lower limit value, the mechanical strength of the separator can be further increased. Meanwhile, when the basis weight of the capacitor separator is equal to or less than the above-described upper limit value, the capacitor internal resistance can be reduced.

The specific tensile strength of the capacitor separator is preferably 30 N·m/g or higher, more preferably 30.5 N·m/g or higher, still more preferably 31 N·m/g or higher. When the specific tensile strength of the capacitor separator is equal to or less than the above-described upper limit value, a problem is unlikely to occur in the production process. Further, the specific tensile strength of the capacitor separator is usually 50 N·m/g or less, particularly 40 N·m/g or less and, for example, 38 N·m/g or less. In the present invention, the term "specific tensile strength" refers to a numerical value obtained by dividing a total value of the specific tensile strength of the separator in the longitudinal direction (MD direction) and that in the transverse direction (TD direction), which are measured in accordance with JIS P8113, by 2.

A method of producing the capacitor separator according to one embodiment of the present invention is not particularly restricted. The above-described separator can be obtained by, for example, producing a wet-laid nonwoven fabric using the fibrillated PVA fibers (A) along with, as required, the binder (B), the other fibrillated fibers (C) and the cellulose fibers (D). A desired wet-laid nonwoven fabric can be efficiently produced by using, for example, a common wet papermaking machine. In this manner, a capacitor separator which is constituted by the fibrillated PVA fibers (A) and, as required, the binder (B), the other fibrillated fibers (C) and the cellulose fibers (D), can be obtained.

In a preferred embodiment of the present invention, the above-described capacitor separator is produced by a method including the step of fibrillating readily fibrillatable polyvinyl alcohol fibers that contain a polyvinyl alcohol and a polyalkylene oxide. This step yields the fibrillated PVA fibers (A).

This method may further include the step of dispersing the thus fibrillated readily fibrillatable polyvinyl alcohol fibers (i.e., the fibrillated PVA fibers (A)) in water along with, as required, the binder (B), the other fibrillated fibers (C) and the cellulose fibers (D), and performing papermaking using a wet papermaking machine.

In this case, since the polyalkylene oxide contained in the fibrillated readily fibrillatable polyvinyl alcohol fibers elutes into water in the beating process and/or the papermaking process, the fibrillated PVA fibers (A) consisting of a polyvinyl alcohol can be easily prepared by performing the beating process and/or the papermaking process.

Examples of the polyvinyl alcohol contained in the readily fibrillatable polyvinyl alcohol fibers include the same ones as those exemplified above for the polyvinyl alcohol constituting the fibrillated PVA fibers (A).

The polyalkylene oxide contained in the readily fibrillatable polyvinyl alcohol fibers is a polymer containing an alkylene oxide as a structural unit. In the present invention, the polyalkylene oxide may be a polymer having a single alkylene oxide as a structural unit, or a copolymer having plural alkylene oxides as structural units. Examples of the polyalkylene oxide include polymers containing an alkylene oxide having 2 to 6 carbon atoms as a structural unit, specifically polyethylene oxides, polypropylene oxides, polybutylene oxides, polyisobutylene oxides, and copolymers and mixtures thereof. In the present invention, the polyalkylene oxide may be a copolymer with other monomer(s) or may be modified, as long as the effects of the present invention are not impaired. When the polyalkylene oxide is a copolymer, the polymerization mode of the copolymer is not particularly restricted, and the copolymer may be in any of a random form, a block form, a graft form, and a tapered form. In the present invention, from the standpoint of improving the ease of fibrillation, the polyalkylene oxide is more preferably at least one selected from the group consisting of polyethylene oxides, polypropylene oxides, and ethylene oxide-propylene oxide copolymers. When the polyalkylene oxide is an ethylene oxide-propylene oxide copolymer, the molar ratio of an ethylene oxide monomer unit and a propylene oxide monomer unit that constitute the ethylene oxide-propylene oxide copolymer (ethylene oxide monomer unit [mol]/propylene oxide monomer unit [mol]) is, from the standpoint of improving the ease of fibrillation, preferably 80/20 to 99/1, more preferably 85/15 to 95/5, still more preferably 88/12 to 92/8. Since an improvement in the ease of fibrillation makes it easier to obtain fibrillated fibers having a relatively long fiber length, the mechanical strength of the separator containing such fibrillated fibers can be improved.

The weight-average molecular weight (Mw) of the polyalkylene oxide is preferably 50,000 or higher, more preferably 60,000 or higher, still more preferably 70,000 or higher, but preferably 3,000,000 or less, more preferably 200,000 or less, still more preferably 150,000 or less. When the weight-average molecular weight (Mw) of the polyalkylene oxide is equal to or higher than the above-described lower limit value, not only a good dispersion state of the polyalkylene oxide in the readily fibrillatable polyvinyl alcohol fibers is attained and the ease of fibrillation is enhanced, but also the mechanical strength of the separator can be improved and the viscosity of a spinning solution can be easily adjusted in a spinning process, which are desirable from the industrial standpoint. Meanwhile, when the weight-average molecular weight (Mw) of the polyalkylene oxide is equal to or less than the above-described upper limit value, fibers with reduced fluffing (single yarn breakage) can be obtained since not only a good dispersion state of the polyalkylene oxide in the readily fibrillatable polyvinyl alcohol fibers is attained and the ease of fibrillation is enhanced but also dislodgment of the polyalkylene oxide in a spinning process is suppressed, so that the mechanical strength of the separator can be further improved. In the present invention, the weight-average molecular weight (Mw) can be measured by gel permeation chromatography.

In the present invention, the polyalkylene oxide is contained in the polyvinyl alcohol fibers and believed to function as a fibrillation aid. In the polyvinyl alcohol fibers, the polyvinyl alcohol and the polyalkylene oxide are at least partially not miscible with each other and thus undergo a phase separation. The structure of the phase separation is not particularly restricted, and examples thereof include a sea-island structure, an interconnected structure, and a layered structure. It is believed that, in the polyvinyl alcohol fibers, the polyvinyl alcohol and the polyalkylene oxide at least partially undergo a phase separation and this makes delamination at their interface more likely to occur, consequently allowing fibrillation of the fibers to readily occur.

In the above-described readily fibrillatable polyvinyl alcohol fibers, the weight ratio of the polyalkylene oxide with respect to the total amount of the polyvinyl alcohol and the polyalkylene oxide is preferably 3% by weight or higher, more preferably 5% by weight or higher, still more preferably 7% by weight or higher, but preferably 40% by weight or lower, more preferably 35% by weight or lower, still more preferably 30% by weight or lower, particularly preferably 25% by weight or lower, especially preferably 20% by weight or lower, extremely preferably 15% by weight or lower and, for example, 10% by weight or less. When the weight ratio of the polyalkylene oxide is equal to or higher than the above-described lower limit value, the ease of fibrillation of the polyvinyl alcohol fibers is further enhanced. Meanwhile, when the weight ratio of the polyalkylene oxide is equal to or lower than the above-described upper limit value, the ratio of the polyalkylene oxide in the polyvinyl alcohol fibers is kept low and, as a result, the properties attributed to the polyvinyl alcohol, such as high adhesion with pulp, alkali resistance and moderate water absorption, are easily exerted, so that not only a separator having a high mechanical strength can be obtained but also the spinning property of the readily fibrillatable polyvinyl alcohol fibers can be improved. When a fibrillation aid such as starch or cellulose is used, it is necessary to add a large amount of the fibrillation aid to the polyvinyl alcohol fibers in order to induce fibrillation. In this case, since the content of the polyvinyl alcohol in the resulting fibers is reduced, the properties inherent to the polyvinyl alcohol are deteriorated and thus, for example, the affinity of the fibers with the polyvinyl alcohol-based binder may be reduced, and the mechanical strength of the separator may be deteriorated.

The true circle-equivalent diameter of the readily fibrillatable polyvinyl alcohol fibers is preferably 5 μm or larger, more preferably 7 μm or larger, still more preferably 10 μm or larger, but preferably 50 μm or smaller, more preferably 30 μm or smaller, still more preferably 20 μm or smaller. When the true circle-equivalent diameter of the readily fibrillatable polyvinyl alcohol fibers is equal to or larger than the above-described lower limit value, agglutination of single yarns during spinning is unlikely to occur, which is industrially advantageous. Meanwhile, when the true circle-equivalent diameter of the readily fibrillatable polyvinyl alcohol fibers is equal to or smaller than the above-described upper limit value, a good fibrillation efficiency is attained during fiber beating, so that a separator having a high mechanical strength can be obtained. In the present invention, the term "true circle-equivalent diameter" means the diameter of a true circle having the same area as that of a cross-section of the fiber of interest.

The readily fibrillatable polyvinyl alcohol fibers can be produced by a method including:

the preparation step of preparing a spinning solution that contains a polyvinyl alcohol, a polyalkylene oxide and water;
the spinning step of performing spinning using the spinning solution to obtain fibers;
the stretching step of stretching the thus obtained fibers; and
the acetalization step of acetalizing the polyvinyl alcohol contained in the fibers.

In the preparation step, the polyvinyl alcohol and the polyalkylene oxide are dissolved in water, with heating as required, to prepare a spinning solution. As required, boric acid, an alkaline component (e.g., sodium hydroxide), an antifoaming agent and the like may be incorporated into the spinning solution. The concentration of the polyvinyl alcohol in the spinning solution is usually 10 to 20% by weight. Further, the weight ratio of the polyalkylene oxide with respect to the total amount of the polyvinyl alcohol and the polyalkylene oxide is the same as the above-described weight ratio of the polyalkylene oxide with respect to the total amount of the polyvinyl alcohol and the polyalkylene oxide in the readily fibrillatable polyvinyl alcohol fibers.

In the spinning step, fibers are obtained by performing spinning using the spinning solution obtained in the preparation step. Specifically, the spinning solution is spun into a coagulation bath from a spinneret and then dehydrated and coagulated. The spinneret may have a circular shape or a shape different from a circular shape, such as a flattened shape, a cross shape, a T-shape, a Y-shape, an L-shape, a triangular shape, a quadrangular shape, or a star-like shape. As the coagulation bath, an aqueous solution of an inorganic salt that is conventionally used in wet spinning of polyvinyl alcohol fibers and has a dehydration capacity can be used. Among such aqueous solutions, as the coagulation bath, an aqueous solution of Glauber's salt (sodium sulfate decahydrate) is preferably used. From the standpoint of improving the mechanical strength of the resulting fibrils and thereby obtaining a separator having a high mechanical strength, boric acid may be dissolved in the spinning solution, and an alkali may be further incorporated therein. The temperature of the coagulation bath is not particularly restricted; however, it is usually 30 to 50°C or so since agglutination of fibers is less likely to occur at a lower temperature.

In this spinning step, in cases where boric acid is added to the spinning solution and this spinning solution is spun into a coagulation bath composed of an alkali-containing aqueous Glauber's salt solution to perform gel spinning, the amount of boric acid added to the spinning solution is preferably 1% by weight or less based on the total amount of the polyvinyl alcohol and the polyalkylene oxide. When the amount of boric acid added to the spinning solution is within the above-described range, since cross-linking caused by boric acid hardly occurs during subsequent dry-heat stretching, the stretching can be performed smoothly. Moreover, in cases where the spinning step is performed not by gel spinning but by an ordinary wet coagulation method using a coagulation bath composed of an alkali-containing aqueous Glauber's salt solution, since a boric acid washing treatment performed on the fibers obtained by spinning is likely to induce dissolution and agglutination of the fibers due to the strong hydrophilicity of the carboxyl groups contained in the polyvinyl alcohol, it is preferred not to perform washing of boric acid. Particularly, agglutination is likely to occur when the ratio of the carboxyl groups in the polyvinyl alcohol exceeds 10% by mole.

Next, in the stretching step, the fibers obtained in the spinning step is stretched. Specifically, the stretching is performed by drawing out the fibers from the coagulation bath into the air using a roller. The stretching step may be performed by any method, such as a method using a guide or a method using a roller. Further, the stretching may be performed in the air, in a high-temperature aqueous salt solution (moist-heat stretching), or in combination thereof. Generally, it is preferred to employ a method of stretching the fibers in the air using a roller and then performing moist-heat stretching. The moist-heat stretching is preferably performed using a saturated aqueous Glauber's salt solution bath at a temperature of about 40 to 90°C or so. In this process, it is more preferred to maintain the moist-heat stretching bath to be acidic since agglutination of the fibers can thereby be inhibited. The stretching is performed such that the stretching ratio is usually 2 to 5, preferably 3 to 4 or so. The term "stretching ratio" used herein refers to a ratio of the length of the fibers after the stretching with respect to the length of the fibers before the stretching.

Then, the fibers obtained in this manner are dried to remove water therefrom, and dry-heat stretching of the fibers is subsequently performed such that the stretching ratio is about 2 to 3. This dry-heat stretching is performed such that the total stretching ratio is not less than 6, preferably not less than 7, more preferably 7 to 13 or so. The drying is usually performed at a temperature of about 80 to 140°C without relaxing the tension applied in the spin-stretching process until water is sufficiently removed, and the subsequent dry-heat stretching is preferably performed while heating the fibers to a temperature of about 200 to 240°C in the air. The term "stretching ratio" used herein for the dry-heat stretching refers to a ratio of the length of the fibers after the dry-heat stretching with respect to the length of the fibers after the above-described stretching but before the dry-heat stretching, and the term "total stretching ratio" used herein refers to a ratio of the length of the fibers after the dry-heat stretching with respect to the length of the fibers before the above-described stretching.

Next, in the acetalization step, the fibers obtained in the stretching step are acetalized using an acetal compound. Examples of the acetal compound include monoaldehydes, such as formaldehyde and acetaldehyde; dialdehydes, such as glutaraldehyde, hexanedial, and nonanedial; and acetals formed by masking the aldehyde groups of these dialdehydes by acetalization with methanol, ethanol, or ethylene glycol. As the acetal compound, particularly, formaldehyde is preferred since it can be easily diverted to existing production equipments and is thus advantageous from the industrial standpoint. Acetalization with formaldehyde is particularly referred to as "formalization".

The acetalization is performed using a composition solution that contains a mineral acid such as sulfuric acid, an acetal compound and, as required, a small amount of a mineral acid salt. Examples of the mineral acid include inorganic acids, such as sulfuric acid, phosphoric acid, nitric acid, and chromic acid; and organic acids, such as carboxylic acid and sulfonic acid. The concentration of the mineral acid in the composition solution is usually 0.3 to 3 mol/l, and the concentration of the acetal compound is usually 0.6 to 7 mol/l. Further, the temperature of the composition solution in the acetalization step is usually 50 to 90°C, preferably 60 to 80°C.

The acetalization degree of the fibers in the acetalization step is preferably 3% by mole or higher, more preferably 6% by mole or higher, still more preferably 8% by mole or higher, yet still more preferably 10% by mole or higher, but preferably 40% by mole or lower, more preferably 30% by mole or lower, still more preferably 20% by mole or lower, yet still more preferably 15% by mole or lower. When the acetalization degree of the polyvinyl alcohol is equal to or higher than the above-described lower limit value, readily fibrillatable polyvinyl alcohol fibers having excellent water resistance can be obtained. Meanwhile, when the acetalization degree of the polyvinyl alcohol is equal to or lower than the above-described upper limit value, the ease of fibrillation of the resulting polyvinyl alcohol fibers is further enhanced.

The readily fibrillatable polyvinyl alcohol fibers can be produced in the above-described manner. In the readily fibrillatable polyvinyl alcohol fibers, a water-soluble polyalkylene oxide is used without a cellulose-based polymer or the like; therefore, the readily fibrillatable polyvinyl alcohol fibers can be spun using an aqueous solution, not an organic solvent. In the case of performing the spinning using an organic solvent, the total production cost is high, including the costs of solvent recovery and the like; however, in one embodiment of the present invention, as described, since wet spinning with an aqueous solution can be performed and the spinning can be done without having to recover any organic solvent, the production cost can be kept low. Moreover, in one embodiment of the present invention, since no cellulose-based polymer is used, the acetalization treatment does not cause cross-linking to proceed at the interface of the polyvinyl alcohol and the polyalkylene oxide; therefore, even when the acetalization degree is high, water resistance can be imparted to the resulting fibers without largely deteriorating the ease of fibrillation.

A method of fibrillating the readily fibrillatable polyvinyl alcohol fibers is not particularly restricted. Usually, the readily fibrillatable fibers can be fibrillated utilizing a chemical swelling force or a mechanical stress, or a combination thereof. The term "chemical swelling force" used herein refers to a capacity to swell the constituents of the fibers, such as the polyvinyl alcohol and the polyalkylene oxide. A swelling agent used for swelling these constituents is not particularly restricted, and examples thereof include water. The mechanical stress can be provided by, for example, a mixer, a beater, a refiner and/or a screw, which applies a shearing force to the polyvinyl alcohol fibers.

Examples of such a method of fibrillating the readily fibrillatable polyvinyl alcohol fibers include a method of performing fibrillation in a state where the fibers are cut into short fibers. In this method of performing fibrillation in a state where the fibers are cut into short fibers, for example, the fibers are cut to a length of 1 to 30 mm, immersed or dispersed in water, and then fibrillated by applying thereto a mechanical stress using a mixer or the like, whereby the fibrillated PVA fibers (A) can be obtained. In this case, the average diameter of the fibrillated PVA fibers (A) is, for example, 0.05 to 8 $\mu$m. The term "average diameter of the fibrillated PVA fibers (A)" used herein means the average diameter of true circles having the same areas as the cross-sections of fibrils of interest. The average diameter of the resulting fibrils can be measured using, for example, a scanning or transmission electron microscope.

The fibrillated PVA fibers (A) obtained in the above-described manner and, as required, the binder (B), the other fibrillated fibers (C) and the cellulose fibers (D) may be dispersed and made into a sheet of paper using a wet papermaking machine. In the wet papermaking machine, a papermaking wire is used, and examples thereof include a cylinder wire, a Tanmo (short Fourdrinier) wire, and a Fourdrinier wire. These papermaking wires may be used singly to form a single layer, or a combination of these papermaking wires may be used to form plural layers together. From the standpoint of obtaining a uniform paper having excellent electrical characteristics with no texture unevenness, multi-layer papermaking is preferred, and double-layer papermaking using a short Fourdrinier-cylinder wire papermaking machine is particularly preferred. After the papermaking using a wet papermaking machine, the resultant is dried using a Yankee dryer or the like, whereby a capacitor separator can be obtained. Needless to say, the capacitor separator may be further subjected to a hot-pressing process and the like as required. Moreover, the electrolyte solution-absorbing property can be improved by performing a hydrophilization treatment such as a surfactant treatment. Furthermore, in order to improve the permeability of electrolyte solutions into the separator, the separator can also be subjected to a gravure process and/or an embossing process.

In another embodiment of the present invention, a capacitor including the above-described separator, particularly an electric double-layer capacitor, can be provided as well. The capacitor can be produced by arranging the separator between a cathode and an anode to form an element and impregnating this element with an electrolyte solution. In the capacitor, the type of the cathode and the anode, the type of the electrolyte solution and the like are not particularly restricted, and those which are conventionally employed in capacitors, particularly in electric double-layer capacitors, can be used. For example, as the electrolyte solution, an aqueous electrolyte solution, such as (e.g., an aqueous nitric acid solution) or an organic electrolyte solution (non-aqueous electrolyte solution) can be used. Particularly, the separator according to another embodiment of the present invention is suitable as a separator for an electric double-layer capacitor that includes carbonaceous cathode and anode and employs an organic electrolyte solution (non-aqueous electrolyte solution) as its electrolyte solution. Examples of the organic electrolyte solution include electrolyte solutions obtained by dissolving a salt formed by a tetraalkylammonium cation and an anion, such as $BF_4^-$, $PF_6^-$, $SO_3CF_3^-$, $AsF_6^-$, $N(SO_2CF_3)_2^-$, or $ClO_4^-$, in an organic solvent, such as propylene carbonate, ethylene carbonate, dimethyl carbonate, diethyl carbonate, methylethyl carbonate, sulfolane, or methylsulfolane.

In yet another embodiment of the present invention, the use of the above-described separator in a capacitor as well as a method thereof can be provided.

The above-described capacitor separator can be used not only in capacitors but also as a battery separator, a filter, a wiper, a packaging material, an abrasive material, an insulating paper, a heat-resistant paper, and the like.

EXAMPLES

The present invention will now be described in detail by way of Examples and Comparative Examples thereof; however, the present invention is not restricted thereto. The physical property values in Examples were measured by the below-described methods.

[Fineness]

The fineness (dtex) of each sample fiber was measured in accordance with JIS L1013 "Testing Methods for Man-made Filament Yarns", 8.3.1b Fineness based on Corrected Mass).

[Aspect Ratio]

The aspect ratio of fibrillated PVA fibers was determined by arbitrarily collecting 20 PVA fibers in a fibrillated state, measuring the width and the length of each of the thus collected fibers under a light microscope, calculating the aspect ratio based on the thus measured values, and then taking the average of the 20 fibers. When fibers other than PVA fibers were contained, the aspect ratio was determined by first removing the fibers other than the PVA fibers in a fibrillated state by a dissolution method conforming to a fiber identification method, and then arbitrarily collecting 20 of the PVA fibers in a fibrillated state, measuring the width and the length of each of the thus collected fibers under a light microscope, calculating the aspect ratio based on the thus measured values, and taking the average of the 20 fibers.

[Fiber True Circle-Equivalent Diameter]

The fiber true circle-equivalent diameter was determined by conversion from the fineness (dtex) of the readily fibrillatable polyvinyl alcohol fibers of interest. The fineness was measured in accordance with JIS L1013 "Testing Methods for Man-made Filament Yarns", 8.3.1b Fineness based on Corrected Mass), and the fiber true circle-equivalent diameter was calculated from the thus measured fineness using the following equation.

$$\text{Diameter (μm)} = 10\sqrt{\text{fineness (dtex)}}$$

[Acetalization Degree]

Using solid $^{13}$C-NMR, the acetalization degree (% by mole) of each sample was determined from the ratio between the peak area derived from acetal bonds formed by formaldehyde (acetal compound) and a polyvinyl alcohol and the peak area derived from methine carbon of the polyvinyl alcohol.

[Water Dissolution Temperature]

Sample fibers in an amount of 2.6 g were added to 400 cc of water (20°C), and the resultant was heated with stirring at a heating rate of 1°C/min and a stirring speed of 280 rpm. The temperature at which the fibers were completely dissolved was measured and defined as water dissolution temperature (°C).

[Beating Degree (Freeness): CSF]

The Canadian Standard Freeness (ml) of each sample was measured in accordance with JIS P8121 "Pulps - Determination of Drainability".

[Thickness]

The thickness (mm) of each sample was measured in accordance with JIS P8118 "Paper and Board - Determination of Thickness, Density and Specific Volume".

[Basis Weight]

The basis weight (g/m$^2$) of each sample was measured in accordance with JIS P8124 "Paper and Board - Determination of Grammage".

[Tensile Strength and Specific Tensile Strength]

The tensile strength (kN/m) of each sample (separator) was measured in the longitudinal direction and the transverse direction in accordance with JIS P8113 "Paper and Board - Determination of Tensile Properties". In the present invention, the tensile strength was defined as a numerical value obtained by dividing a total value of the tensile strength of the separator in the longitudinal direction and the transverse direction by 2. Further, based on the thus measured tensile strength and basis weight, the specific tensile strength (N·m/g) of the sample was calculated in accordance with JIS P8113 "Paper and Board - Determination of Tensile Properties". The specific tensile strength is preferably not less than 30 N·m/g.

[Air Permeability]

The air permeability (cc/cm$^2$/sec) of each sample was measured using a Frajour-type tester in accordance with JIS L1096 6.27 "General Woven Fabric Testing Method - Air Permeability".

[Internal Resistance]

Electric double-layer capacitors produced in the below-described Examples and Comparative Examples were each charged to 2.7 V at a charging current of 20 mA, and each capacitor was subsequently further changed for 2 hours under a constant voltage condition of 2.7 V and then discharged to 0 V at a discharging current of 20 mA. The internal resistance ($\Omega$) was determined from the reduction in voltage immediately after the discharging in the above-described cycle. The internal resistance is preferably 1.4 $\Omega$ or less.

[Production Example 1] Preparation of Fibrillated PVA Fibers

A polyvinyl alcohol (viscosity-average polymerization degree: 1,700, saponification degree: 99.9% by mole) was dissolved in water to prepare a 15%-by-weight aqueous polyvinyl alcohol solution. Then, a polyethylene oxide (weight-average molecular weight (Mw): 80,000) was added thereto in an amount of 10% by weight with respect to the total amount of the polyvinyl alcohol and the polyethylene oxide, whereby a spinning solution was prepared. To the spinning solution, 0.003% by weight of a surfactant (VL-22, manufactured by Miyoshi Oil & Fat Co., Ltd.) and 0.002% by weight of an antifoaming agent (JOLSHIN LB-D, manufactured by Nisshin Kasei Co., Ltd.) were added for the purpose of improving the spinning property. This spinning solution was discharged at 90°C from a spinneret having 1,000 holes (circular) of 80 $\mu$m$\varphi$ in diameter into a coagulation bath composed of a 45°C saturated aqueous sodium sulfate solution, and the resulting fibers were pulled out using a first roller and subsequently subjected to 4-fold moist-heat stretching in a stepwise manner via a second roller to a drying roller, followed by drying at 130°C. Continuously, the fibers were further stretched at a stretching ratio of 2. Thereafter, using a composition solution containing 2 mol/l of sulfuric acid (mineral acid) and 1 mol/l of formaldehyde, an acetalization treatment was performed at 70°C to adjust the acetalization degree (formalization degree) of the polyvinyl alcohol to be 10% by mole, whereby readily fibrillatable polyvinyl alcohol fibers were obtained. The thus obtained readily fibrillatable polyvinyl alcohol fibers had a fiber true circle-equivalent diameter of 14 $\mu$m (size before beating).

Next, the readily fibrillatable polyvinyl alcohol fibers obtained above were cut to a length of 2 mm, and 5 g of the thus cut fibers was dispersed in 1,000 ml of 20°C water and then beaten for 5 minutes using a mixer (MX-152S, manufactured by Matsushita Electric Industrial Co., Ltd., rotation speed: 9,700 rpm). The resulting beaten solution was filtered to recover cotton-like fibrillated PVA fibers. These fibrillated PVA fibers had a CSF of 10 ml and an aspect ratio of 500 or higher. FIG. 1 shows an optical micrograph of the fibrillated PVA fibers.

[Production Example 2] Preparation of Fibrillated Cellulose Fibers

Fibrillatable cellulose fibers (Lyocell, manufactured by Lenzing AG, fineness: 1.7 dtex, fiber length: 3 mm) were treated in the same manner as in Production Example 1, whereby fibrillated cellulose fibers having a CSF of 10 ml were obtained.

[Example 1]

A slurry was prepared by dispersing, in water, 40% by weight of the fibrillated PVA fibers obtained in Production Example 1, 40% by weight of the fibrillated cellulose fibers obtained in Production Example 2, 15% by weight of a mercerized pulp (mercerized LBKP (unbeaten)) and 5% by weight of polyvinyl alcohol-based binder fibers (VINYLON binder: VPB105-1×3, manufactured by Kuraray Co., Ltd., fineness: 1.1 dtex, fiber length: 3 mm, water dissolution temperature: 74°C). Using this slurry, double-layer combination papermaking was performed using a short Fourdrinier-cylinder papermaking machine, and the resultant was dried using a Yankee dryer to obtain a separator having a basis weight of 18.8 g/m$^2$ and a thickness of 0.030 mm. Various evaluations were conducted on this separator. The results thereof are shown in Table 2.

[Examples 2 and 3 and Comparative Examples 1 to 5]

Separators were each obtained in the same manner as in Example 1, except that the amounts of the fibrillated PVA fibers, fibrillated cellulose fibers, mercerized pulp and polyvinyl alcohol-based binder fibers were changed in accordance with Table 1. Various evaluations were conducted on the thus obtained separators. The results thereof are shown in Table 2.

[Comparative Example 6]

A separator was obtained in the same manner as in Example 1 except that, in accordance with Table 1, unbeaten polyvinyl alcohol fibers (CSF: 780 ml) having an aspect ratio of 121 were used in place of the fibrillated PVA fibers having an aspect ratio of 500 or higher and a CSF of 10 ml. Various evaluations were conducted on this separator. The results thereof are shown in Table 2.

[Table 1]

| [% by weight] | | Fibrillated PVA fibers (CSF: 10 ml) | PVA fibers (CSF: 780 ml) | Fibrillated cellulose fibers (CSF: 10 ml) | Mercerized LBKP | Polyvinyl alcohol-based binder |
|---|---|---|---|---|---|---|
| Example | 1 | 40 | - | 40 | 15 | 5 |
| | 2 | 30 | - | 50 | 15 | 5 |
| | 3 | 40 | - | 40 | 10 | 10 |
| Comparative Example | 1 | - | - | 80 | 15 | 5 |
| | 2 | - | - | 80 | 10 | 10 |
| | 3 | - | - | 80 | 5 | 15 |
| | 4 | - | - | 80 | - | 20 |
| | 5 | 20 | - | 60 | 15 | 5 |
| | 6 | - | 40 | 40 | 15 | 5 |

[Table 2]

| | | Basis weight [g/m$^2$] | Thickness [μm] | Tensile strength [kN/m] | Specific tensile strength [N·m/g] | Air permeability [cc/cm$^2$/sec] | Internal resistance [Ω] |
|---|---|---|---|---|---|---|---|
| Example | 1 | 18.8 | 30 | 0.61 | 32.5 | 0.39 | 1.28 |
| | 2 | 18.6 | 30 | 0.57 | 30.6 | 0.40 | 1.27 |
| | 3 | 19.5 | 29 | 0.72 | 36.9 | 0.32 | 1.30 |
| Comparative Example | 1 | 19.1 | 29 | 0.45 | 23.7 | 0.41 | 1.29 |
| | 2 | 18.2 | 29 | 0.53 | 29.4 | 0.33 | 1.31 |
| | 3 | 19.3 | 29 | 0.61 | 31.4 | 0.25 | 1.46 |
| | 4 | 18.5 | 28 | 0.59 | 32.1 | 0.20 | 1.66 |
| | 5 | 18.7 | 30 | 0.52 | 27.6 | 0.41 | 1.28 |
| | 6 | 18.1 | 28 | 0.22 | 12.3 | 5.24 | 1.22 |

From the results shown in Table 1, it is seen that the separators according to the present invention, which were obtained in Examples 1 to 3, exhibited a high specific tensile strength and, at the same time, had a reduced internal resistance. On the other hand, the separators obtained in Comparative Examples 1 to 6 did not achieve a high specific tensile strength and a low internal resistance at the same time.

**Claims**

1. A capacitor separator comprising fibrillated fibers consisting of a polyvinyl alcohol-based resin in an amount of not less than 30% by weight based on a total weight of said separator.

2. The capacitor separator according to claim 1, wherein the fibrillated fibers consisting of said polyvinyl alcohol-based resin are in a cotton-like form.

3. The capacitor separator according to claim 1 or 2, wherein the fibrillated fibers consisting of said polyvinyl alcohol-based resin have an aspect ratio of 500 or higher.

4.  The capacitor separator according to any one of claims 1 to 3, comprising the polyvinyl alcohol-based resin as a binder in an amount of not greater than 15% by weight.

5.  The capacitor separator according to any one of claims 1 to 4, wherein the fibrillated fibers consisting of said polyvinyl alcohol-based resin have a CSF of 5 to 500 ml.

6.  The capacitor separator according to any one of claims 1 to 5, having a thickness of 20 to 80 $\mu$m and a specific tensile strength of not less than 30 N·m/g.

7.  A method of producing the capacitor separator according to any one of claims 1 to 6, said method comprising the step of fibrillating readily fibrillatable polyvinyl alcohol fibers that comprise a polyvinyl alcohol and a polyalkylene oxide.

8.  The method according to claim 7, wherein a weight ratio of the polyalkylene oxide in said readily fibrillatable polyvinyl alcohol fibers is 3 to 40% by weight with respect to a total amount of the polyvinyl alcohol and the polyalkylene oxide.

9.  A capacitor comprising the capacitor separator according to any one of claims 1 to 6.

Fig.1

**EP 3 480 836 A1**

## INTERNATIONAL SEARCH REPORT

| International application No. |
|---|
| PCT/JP2017/024005 |

**A. CLASSIFICATION OF SUBJECT MATTER**
*H01G11/52*(2013.01)i, *H01G9/02*(2006.01)i, *H01G11/84*(2013.01)i

According to International Patent Classification (IPC) or to both national classification and IPC

**B. FIELDS SEARCHED**

Minimum documentation searched (classification system followed by classification symbols)
H01G11/52, H01G9/02, H01G11/84

Documentation searched other than minimum documentation to the extent that such documents are included in the fields searched
Jitsuyo Shinan Koho          1922–1996   Jitsuyo Shinan Toroku Koho   1996–2017
Kokai Jitsuyo Shinan Koho    1971–2017   Toroku Jitsuyo Shinan Koho   1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2016-030862 A  (Kuraray Co., Ltd.),<br>07 March 2016 (07.03.2016),<br>paragraphs [0004] to [0017], [0030], [0032]<br>(Family: none) | 1-6,9<br>7,8 |
| Y | JP 03-234815 A  (Kuraray Co., Ltd.),<br>18 October 1991 (18.10.1991),<br>claims; examples<br>(Family: none) | 7,8 |
| Y | JP 2010-229560 A  (Teijin Ltd.),<br>14 October 2010 (14.10.2010),<br>paragraph [0084]; examples<br>(Family: none) | 7,8 |

☒  Further documents are listed in the continuation of Box C.          ☐  See patent family annex.

| * | Special categories of cited documents: |
|---|---|
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 01 September 2017 (01.09.17) | 12 September 2017 (12.09.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**INTERNATIONAL SEARCH REPORT**

| International application No. |
|---|
| PCT/JP2017/024005 |

C (Continuation).　DOCUMENTS CONSIDERED TO BE RELEVANT

| Category* | Citation of document, with indication, where appropriate, of the relevant passages | Relevant to claim No. |
|---|---|---|
| A | JP 2004-293027 A  (Kuraray Co., Ltd.), 21 October 2004 (21.10.2004), & US 2004/0180597 A1　 & EP 1457591 A1 & CN 1530474 A | 1-9 |
| A | JP 10-254452 A  (Kuraray Co., Ltd.), 25 September 1998 (25.09.1998), (Family: none) | 1-9 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2938315 B

- JP 3290734 B